## Europäisches Patentamt
## European Patent Office
## Office européen des brevets

(19)

(11) Numéro de publication: **0 283 341**
**B1**

(12)

# FASCICULE DE BREVET EUROPEEN

(45) Date de publication du fascicule du brevet:
**16.05.90**

(51) Int. Cl.⁵: **A47J 31/60**, B65F 1/14

(21) Numéro de dépôt: **88400367.4**

(22) Date de dépôt: **18.02.88**

(54) **Boîte à marcs.**

(30) Priorité: **16.03.87 FR 8701240**

(43) Date de publication de la demande:
**21.09.88 Bulletin 88/38**

(45) Mention de la délivrance du brevet:
**16.05.90 Bulletin 90/20**

(84) Etats contractants désignés:
**AT BE CH DE ES FR GB GR IT LI LU NL SE**

(56) Documents cités:
**FR-A- 2 567 011**
**GB-A- 435 745**
**US-A- 1 765 267**

(73) Titulaire: **Azancot, Armand, 24, avenue Pasteur,**
**F-92400 Courbevoie(FR)**

(72) Inventeur: **Azancot, Armand, 24, avenue Pasteur,**
**F-92400 Courbevoie(FR)**

ACTORUM AG

## Description

La présente invention concerne un dispositif pour vider le marc de café provenant des porte-filtre des machines à café express conforme au préambule de la revendication 1.

Le vidage des porte-filtre de machines à café express se fait, traditionnellement de la façon suivante:

L'utilisateur dispose en général d'une poubelle qui se trouve en avant comptoir et se voit obligé, pour vider le marc de café contenu dans le porte-filtre de sa machine, de se retourner et de se baisser pour taper ledit porte-filtre afin d'en dégager le marc de café.

Le dispositif selon l'invention permet d'éviter cette manœuvre. Par ailleurs du FR-A 2 567 011 est connu un dispositif conforme au préambule de la revendication 1. Dans ce dispositif, le filtre vient frapper le rebord supérieur du récipient entaillé partiellement de façon à révéler une ouverture suffisante pour être frappée par le bras porte-filtre, ledit rebord étant renforcé d'un revêtement amortisseur par exemple du caoutchouc.

Ce dispositif ne donne pas satisfaction en ce sens qu'une partie du marc expulsé du filtre après avoir heurté le rebord du récipient, tombe à l'extérieur du celui-ci.

La présente invention permet de remédier aux inconvénients ci dessus mentionnés, en ce que, conformément à la partie caractérisante de la revendication 1, ledit moyen destiné à être frappé par le porte filtre est constitué d'une barre disposée en travers de ladite ouverture sensiblement dans le plan de celle-ci.

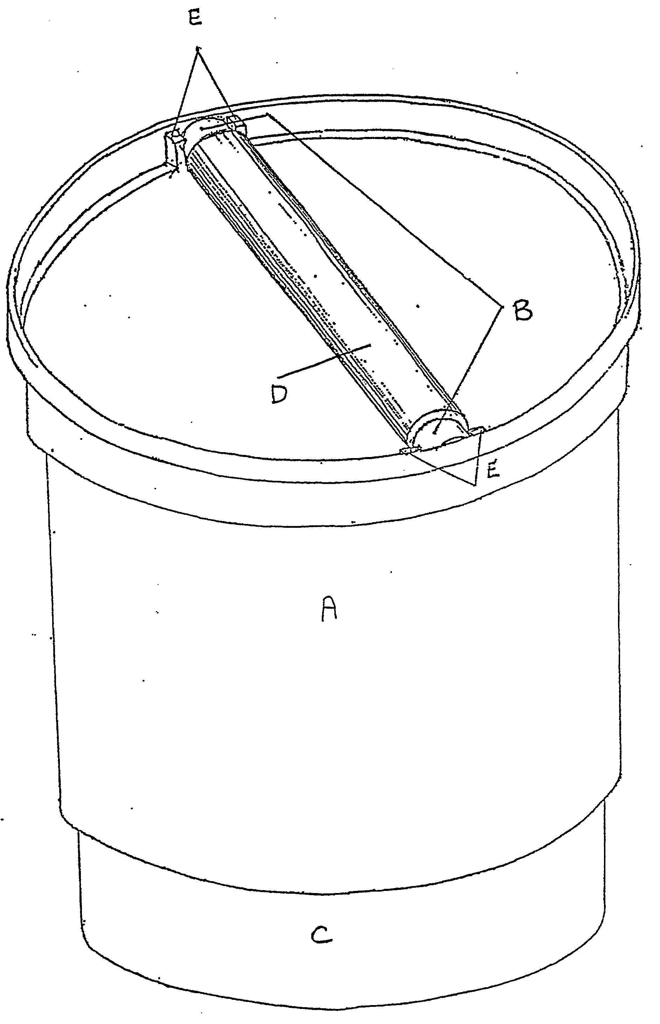

La figure ci-jointe représente le cylindre dit: "BOITE A MARCS" selon l'invention. Selon un mode de réalisation non limitatif les dimensions en sont les suivantes:

La hauteur est de 27 cm
Le diamètre est de 24 cm
Le diamètre de la barre en diagonale peut être variable, en principe il est de 3 ou 4 cm.

La partie inférieure de la boîte est en léger retrait afin de permettre son adaptation éventuelle à un système de support, tout en permettant une bonne stabilité.

En référence à la figure jointe, le dispositif permettant de vider le marc de café provenant des machines à café express selon l'invention, comporte un récipient cylindrique (A) présentant à son orifice supérieur une barre cylindrique (B) destinée à être frappée par le porte-filtre de la machine à café.

Cette barre est maintenue par deux logements opposés (E) prévus sur les bords intérieurs de son ouverture permettant une bonne stabilité et ouverts en partie supérieure pour permettre l'échange de ladite barre.

Le décrochement (C) de la boîte dans sa partie inférieure, permettra son adaptation à un système de support permettant de rehausser l'ensemble.

La barre cylindrique (B) posée en diagonale sera recouverte d'une feuille de caoutchouc (D) destinée à amortir le choc et à préserver le filtre du porte-filtre au moment de l'opération de vidage du marc, et pourra être réalisée en bois.

Le dispositif qui vient d'être décrit, pourra en variante, être d'une autre forme que cylindrique avec les mêmes caractéristiques techniques aussi bien pour le récipient que pour la barre, celle-ci pouvant être disposée autrement qu'en diagonale selon les formes données à l'ouverture du récipient.

Le dispositif selon l'invention, est particulièrement destiné au vidage du marc de café provenant des machines à café express.

## Revendications

1 / Dispositif permettant de vider le Marc de café provenant des machines à café express caractérisé en ce qu'il comporte un recipient ( A ) présentant à son orifice supérieur une barre ( B ) destinée à venir y frapper le porte filtres de la machine à café et à amortir le choc .

2 / Dispositif selon revendication 1 caractérisé en ce que la barre ( B ) est recouverte d'une feuille de caoutchouc ( D ) pour amortir le choc .

3 / Dispositif selon revendication 2 caractérisé en ce que la boite présente dans sa partie inférieure un décrochement ( C ) permettant son adaptation à un système de support .

4 / Dispositif selon revendication 1 caractérisé en ce que la barre ( B ) est en bois et, est cylindrique .

5 / Dispositif selon revendication 1 caractérisé en ce que la barre est disposée en diagonale de l'ouverture d'un recipient cylindrique .

6 / Dispositif selon revendication 1 caractérisé en ce que la barre ( B ) est maintenue par Deux logements ( E ) opposés prévus sur le bord intérieur de l'ouverture .

## Patentansprüche

1. Eine Vorrichtung, die es ermöglicht, den Kaffeesatz aus den Espressomaschinen zu entleeren, die mit einem Gefäß (A) ausgestattet sind, das oben geöffnet ist und am oberen Rand über eine Vorrichtung (B) verfügt, die durch Berührung der Filterträger der Kaffeemaschine den darin enthaltenen Kaffeesatz aus dem Filter entleert und gleichzeitig den Stoß abschwächt.

Diese Vorrichtung zeichnet sich durch das Teil (B) aus, das aus einem Stab besteht, der über der Öffnung angebracht ist.

2. Vorrichtung gemäß Forderung 1:
Der Stab (B) ist mit einer Gummischicht (D) überzogen, um den Stoß zu dämpfen.

3. Vorrichtung gemäß Forderung 2:
Der Behälter (A) verfügt im unteren Teil über eine Schiebevorrichtung (C), die die Befestigung an ein Trägersystem erlaubt.

4. Vorrichtung gemäß Forderung 1:
Der Stab (B) ist aus Holz gefertigt und zylindrisch geformt.

5. Vorrichtung gemäß Forderung 1:
Der Stab (B) ist dem Durchmesser der zylindrischen Gefäßöffnung angepaßt.

6. Vorrichtung gemäß Forderung 1:

Der Stab (B) wird durch 2 gegenüberliegende Halterungen (E) am inneren Rand der Öffnung befestigt.

**Claims**

1. An appliance that is intended to be used to receive used coffee grounds from espresso coffee machines. The appliance consists of a receptacle (A) open at the upper end and having a device (B) on which the coffee machine filter holder may be tapped to empty the coffee grounds and is able to absorb the impact of the tapping. The device (B) consists of a bar placed across the opening of the container and which is essentially at the same level as the opening.

2. The appliance according to claim 1 is described further in that the bar (B) is covered by rubber pad (D) to absorb the impact of the tapping of the filter holder.

3. The appliance according to claim 2 is described further in that the receptacle (A) has a disconnecting device (C) at its lower end that permits it to be adapted to a support system.

4. The appliance according to claim 1 is described further in that the bar (B) is cylinder made of wood.

5. The appliance according to claim 1 is described further in that the bar (B) lies along the diameter of the receptacle (A) which is cylindrical.

6. The appliance according to claim 1 is described further in that the bar (B) is supported by two opposing sockets (E) set on the inside edge of the opening.

E

B

D

E

A

C